# EUROPÄISCHE PATENTANMELDUNG

(11) **EP 1 479 333 A2**
(43) Veröffentlichungstag der Anmeldung: **24.11.2004**
(21) Anmeldenummer: 04010774.0
(22) Anmeldetag: 06.05.2004
(51) Int. Cl.: A47K 3/30, A47K 3/34, A47K 3/36

(54) **Feststehendes Seitenteil mit Beleuchtung für eine Duschabtrennung**

(30) Priorität: 22.05.2003 DE 10323715
(71) Anmelder: MUNCH, Dipl.-Ing. Paul-Jean, 68910 Labaroche (FR)
(72) Erfinder: MUNCH, Dipl.-Ing. Paul-Jean, 68910 Labaroche (FR)
(74) Vertreter: Borchert, Uwe R., Dipl.-Ing.

(57) **Zusammenfassung**

Die Erfindung betrifft ein feststehendes Seitenteil für eine Duschabtrennung, das aus einer flächigen Glasscheibe (2) besteht. Das Seitenteil ist dabei durch ein Wandanschlussprofil (3), welches zwei beabstandete Schenkel (4) aufweist, stationär an einer Wand (1) befestigt. Innerhalb des Wandanschlussprofiles (3) taucht bereichsweise die Glasscheibe (2) ein und wird auch durch das Wandanschlussprofil (3) gehalten. In einem dahinter verbleibenden Hohlraum (7) ist mindestens eine Lichtquelle enthalten.

## Beschreibung

Die Erfindung betrifft ein feststehendes Seitenteil, das im Wesentlichen aus einer flächigen Glasscheibe besteht, wie es bei Duschabtrennungen Verwendung findet.

Duschabtrennungen, die mit feststehenden Seitenteilen und daran direkt oder indirekt montierten Drehtüren bzw. Schiebetüren ausgestattet sind, sind hinlänglich bekannt. Dabei werden die feststehenden Seitenteile durch Montageprofile bzw. Wandanschlussprofile an bestehende Gebäudewände und Duschtassen so montiert, dass kein Wasser aus dem Innenraum der Duschabtrennung heraustreten kann.

In der EP 0 055 384 B1 wird eine Trennwand für eine Dusche beschrieben, bei der neben feststehenden Seitenteilen auch verschiebbare Türen vorhanden sind. Die Seitenteile sind dabei an ihren unteren und oberen Querseiten in Profilen gehalten.

Die Aufgabe der Erfindung besteht darin, derartige feststehende Seitenteile von Duschabtrennungen hinsichtlich der optischen Erscheinung zu verbessern und der Person, die eine solche Duschabtrennung benutzt, ein höheres Sicherheitspotential zu gewähren.

Gelöst wird diese Aufgabe durch die Merkmale des Patentanspruches 1. Vorteilhafte Ausgestaltungen eines feststehenden Seitenteiles des Patentanspruches 1 ergeben sich aus den Unteransprüchen.

Die Erfindung richtet sich dabei auf ein Seitenteil einer Duschabtrennung, das durch ein Wandanschlussprofil an einer Wand und/oder auf einer Duschtasse durch eine kraft- und formschlüssige Verbindung befestigt wird. Innerhalb des Wandanschlussprofiles ist zumindest ein Hohlraum ausgebildet, in dem bereichsweise die Glasscheibe des feststehenden Seitenteiles eintaucht und befestigt ist. Der Hohlraum, der sich im Anschluss an die eingetauchte Glasscheibe befindet, ist mit einer Lichtquelle ausgestattet.

Dadurch, dass die Lichtquellen innerhalb des Profiles platziert sind und die Glasscheiben durch an den Profilen vorhandenen Schenkeln bzw. an den Schenkeln vorhandenen elastischen Lippen eingebettet sind, liegt eine sichere Montage des Leuchtmittels vor. Es ist auch denkbar, dass die Profile zusätzlich mit Isolierungen versehen sind, die z.B. das Eindringen von Wasser und Schmutz verhindern.

Ein derartiges Profil kann aus Leichtmetall, Messing, Edelstahl oder einem Kunststoff bestehen. Bei der Verwendung von Kunststoff können zwei Ausführungen von Kunststoff erfindungsgemäß verwendet werden, dieses sind zum einen nichttransparente Kunststoffe und zum anderen transparente Kunststoffe, die das Licht eines Leuchtmittels durchscheinen lassen.

Bei der Verwendung eines nichttransparenten Kunststoffes für ein Wandanschlussprofil wird genauso wie bei den Materialien Leichtmetall, Messing oder Edelstahl die Montage so ausgeführt, dass über eine Stimkante der Glasscheibe, die in das Wandanschlussprofil hineinragt, das von der Lichtquelle innerhalb des Wandanschlussprofiles abgegebene Licht weitergeleitet wird. Dabei ist für den Betrachter, eines solchen Seitenteiles mit Wandanschlussprofil, es nicht erkennbar, dass sich innerhalb des Wandanschlussprofiles ein Leuchtmittel befindet.

Bei einer zweiten Ausführungsform können als Material für ein Wandanschlussprofil transparente Kunststoffe herangezogen werden. Die Transparenz der entsprechenden Kunststoffe muss so sein, dass das Licht der Lichtquelle, die wieder innerhalb des Wandanschlussprofiles eingebettet ist, nach außen austreten kann.

Hier gibt es unterschiedliche Ausführungsmöglichkeiten, wobei in einer weiteren Ausgestaltung der Erfindung das gesamte Wandanschlussprofil so transparent ist, dass es nach allen Seiten, d. h. nicht nur zur Stimkante der Glasscheibe hin, sondern auch an den Schenkeln des Wandanschlussprofiles ein Lichtaustritt, der innerhalb des Wandanschlussprofiles platzierten Lichtquelle, ermöglicht wird. Es ist jedoch auch hier im Bereich der Anwendungstechnik möglich, dass beispielsweise ein Schenkel des Wandanschlussprofiles, der z.B. zum Duschinnenraum weist, aus einem nicht transparenten Material besteht, so dass ein Lichtaustritt nur über die transparenten Schenkel möglich ist. In einem solchen Falle ist neben einer teilweise beleuchteten Glasscheibe eines Seitenteiles auch eine Beleuchtung eines Profiles zusätzlich oder ausschließlich möglich. Es liegt auch im Bereich der Erfindung, dass nur die Profile durch darin befindliche Leuchtmittel als Lichtquelle erstrahlen.

Ferner ist es möglich, innerhalb des Wandanschlussprofiles Bereiche abzudecken z.B. durch eine Folie, um nur an bestimmten Schenkeln bzw. in bestimmten Bereichen eine Beleuchtung eines Profiles zu erreichen. Es ist auch möglich innerhalb der Profile lichtreflektierende Folien anzubringen, um die Leuchtkraft des Leuchtmittels zu verstärken.

Um eine größere Stabilität innerhalb eines aus Kunststoff gefertigten Wandanschlussprofiles zu erzielen, kann es in einem weiteren Ausführungsbeispiel zwischen den freistehenden Schenkeln des Wandanschlussprofiles, zur Aufnahme der Glasscheibe, einen Zwischensteg geben. Durch einen solchen Zwischensteg wird der Hohlraum, der für die Aufnahme der Lichtquelle vorgesehen ist, nach außen hin gänzlich abgeschlossen. Somit ist es nicht möglich, dass auf dem gesamten Längsstück Feuchtigkeit innerhalb dieses Hohlraumes eindringen kann. Die Enden des Hohlraumes können dann durch eine entsprechende Isolierung abgedichtet werden.

Auch bei einem Ausführungsbeispiel eines aus transparentem Kunststoff bestehenden Wandanschlussprofiles können im Bereich der Aufnahme der Glasscheibe elastisch angeformte Lippen vorhanden sein. Hierdurch wird eine sichere Einbettung der Glasscheibe gleichzeitig gewährt.

Während bei den vorhergehenden Ausführungsbeispielen eines feststehenden Seitenteiles davon ausgegangen worden ist, dass das Wandanschlussprofil entweder durch eine kraft- und formschlüssige Verbindung im Zusammenwirken mit einer Vorrichtung befestigt wird, ist es auch möglich, dieses Wandanschlussprofil nur durch eine Klipsverbindung oder durch eine Klebeverbindung mit dem Wandbereich zu befestigen.

In Weiterführung der Erfindung kann auf jegliche Art von herkömmlichen Befestigungen des Wandanschlussprofiles verzichtet werden, wenn die Glasscheibe durch entsprechende Wandhalter, die innerhalb der Glasscheibe, z. B. an einer Oberfläche bündig eingelassen sind, befestigt werden. In einem solchen Fall kann gleich eine Dichtung im Bereich der Wand verwendet werden, die den Innenraum der Duschabtrennung nach außen hin durch diese Dichtung abdichtet. In dieser Dichtung können ebenfalls Leuchtmittel wasserdicht eingebettet sein, die über die Stirnkante der Glasscheibe das Licht in die Glasscheibe eintreten lassen. Auch die vor beschriebene Dichtung kann in Verbindung mit einem Profil und Leuchtmittel ausgeführt werden. Es versteht sich, dass natürlich die Glasscheibe des Seitenteiles nicht nur im Wandbereich sondern auch an der gegenüberliegenden Stirnkante mit entsprechend aufbereiteten Leuchtmitteln versehen werden kann.

In einer weiteren Ausführungsform ist es denkbar, ein Wandanschlussprofil der vorgenannten Art innerhalb einer Wand einzulassen. Dieses würde die elektrische Installation zu den Leuchtmitteln enorm vereinfachen, da die Leitungen für die Stromzuführung innerhalb der Wand gleich mitverlegt werden könnten. Der Anschluss der Glasscheibe an ein derartiges Wandanschlussprofil wäre in der gleichen Art wie bereits beschrieben zu realisieren.

In einer weiteren Ausgestaltung kann das innerhalb der Wand eingelassene Profil auch so ausgebildet sein, dass dieses eine größere Breite aufweist als die Dicke der Glasscheibe. Somit können auch Bautoleranzen bei der Montage aufgefangen werden. Bei einer solchen Ausführung kann z.B. ein derartiges Profil innerhalb der Wand eingelassen werden, das an der Wandoberfläche z.B. durch ein transparentes lichtdurchlässiges Profil verschlossen wird. Damit an der vor dem Profil platzierten Stirnkante der Glasscheibe des Seitenteiles kein Licht vorbeischeinen kann, können innerhalb der Abdeckung nichttransparente Streifen angebracht werden. Auch ist es denkbar das Leuchtmittel so auszuführen, das es auf die davor befindliche Glasscheibenmitte einjustiert werden kann.

In einer weiteren Ausführungsform kann ein in die Wand eingelassenes Profil verwendet werden, das sowohl die Stirnkante des Seitenteiles beleuchtet als auch einen Streifen in der Wand.

Neben der Ausführung eines Seitenteiles mit Glasscheiben ist es natürlich auch möglich, derartige Seitenteile aus Acryl-Gläsern herzustellen.

Als Lichtquelle kann jedes Leuchtmittel verwendet werden, welches keine hohe elektrische Energie benötigt, darüber hinaus nur eine geringe Wärmestrahlung erzeugt und im Niedervoltbereich angesiedelt ist. Hierbei haben sich vorzugsweise LED's als Mittel der Wahl herausgestellt. Diese LED's werden auf einer Platine, die gleichzeitig eine mechanische Sicherheit und damit Fixierung der LED's gewährleistet, elektrisch miteinander verbunden. Durch die entsprechende Plazierung der LED's können beispielsweise direkt die Stirnkante der Glasscheibe und/oder auch die Schenkel des Wandanschlussprofiles von innen angestrahlt werden. Hierdurch ergeben sich neben sicherheitstechnischen Aspekten auch optische Effekte, die dafür benutzt werden können, eine bessere Anpassung an umgebende Rauminstallationen zu gewährleisten.

Durch die direkte Anstrahlung der Schenkel des Wandanschlussprofiles und der Stirnkante der Glasscheibe kann das Licht der Lichtquellen entsprechend mit einer hohen Intensität entweder aus den Schenkeln des Wandanschlussprofiles heraustreten bzw. in die Fläche der Glasscheibe eintreten. Dieses erzeugt entsprechende optische Effekte, die noch dadurch verstärkt werden können, dass die Oberfläche des Glases durch entsprechende Ätzungen bzw. Bedruckungen zu einer Verteilung des Lichtes beitragen. Neben der Verwendung von normalen Glassarten kann zur indirekten Beleuchtung des Seitenteiles auch strukturiertes Glas verwendet werden.

Damit die Lichtquellen vor äußerer Beschädigung z. B. durch Wasser geschützt sind, ist der Hohlraum, in dem sich die Lichtquellen befinden, zumindest teilweise mit einer entsprechenden Isolierung versehen. Es kann die Isolation auch dadurch verbessert werden, dass der Hohlraum mit einer entsprechenden Vergussmasse, die ebenfalls lichtdurchlässig sein kann und damit eine gute Lichtleitung erzeugt, versehen werden. Bei der stirnseitigen Anstrahlung der Glasscheibe verteilt sich über einen bestimmten Bereich das Licht innerhalb der Glasscheibe; es entsteht quasi eine indirekte Beleuchtung.

Neben der vorbeschriebenen Ausführung eines beleuchteten Wandanschlußprofiles für die vertikale Seite einer Glasscheibe kann die Erfindung gleichzeitig oder getrennt auch für Profile des Seitenteiles angewendet werden die eine untere und/oder obere Begrenzung der Glasscheibe, wie aus dem Stand der Technik bekannt, aufweisen. Die Leuchtmittel werden in analoger Art und Weise eingebaut.

Ferner kann auch die vordere Glaskante des feststehenden Seitenteiles, d.h. die von der Wand absteht, mit einer entsprechenden Beleuchtungseinrichtung versehen werden. In einem solchen Falle kann das Leuchtmittel entweder in einem die Glasscheibe einfassenden Profil und/oder einer Dichtung integriert sein. Die elektrischen Leiter für die Stromzuführung können entweder in einem vertikalen oberen und/oder unteren das Seitenteil einfassenden Profil und/oder Dichtung verlaufen.

Weitere Einzelheiten, Merkmale und Vorteile der Erfindung ergeben sich aus nachfolgender Beschreibung bevorzugter Ausführungsbeispiele anhand der Zeichnungen.

Es zeigen:
- Fig. 1: eine schematische Darstellung einer Duschabtrennung,
- Fig. 2: ein Wandanschlussprofil im Schnitt mit einer Glasscheibe,
- Fig. 3: eine Variante eines Wandanschlussprofils mit einer Glasscheibe,
- Fig. 4: ein innerhalb einer Wand eingebautes Wandanschlussprofil,
- Fig. 5: ein Wandanschlussprofil mit zusätzlichem Wandhalter für die Glasscheibe,
- Fig. 6: eine weitere Ausführungsform eines innerhalb einer Wand eingelassenen Wandanschlussprofiles,

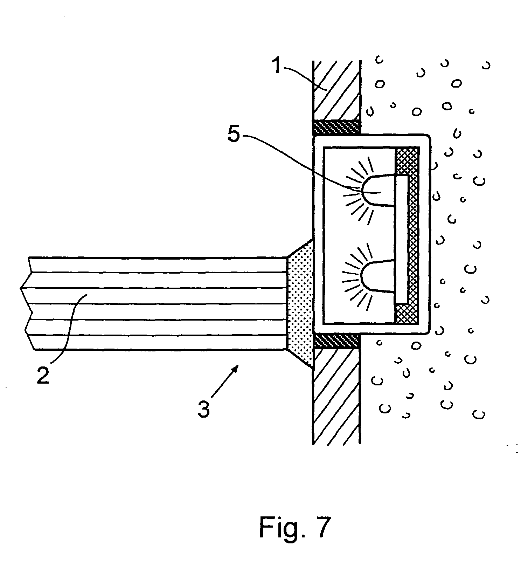

- Fig. 7: eine Variante eines Wandanschlussprofiles nach Figur 6,

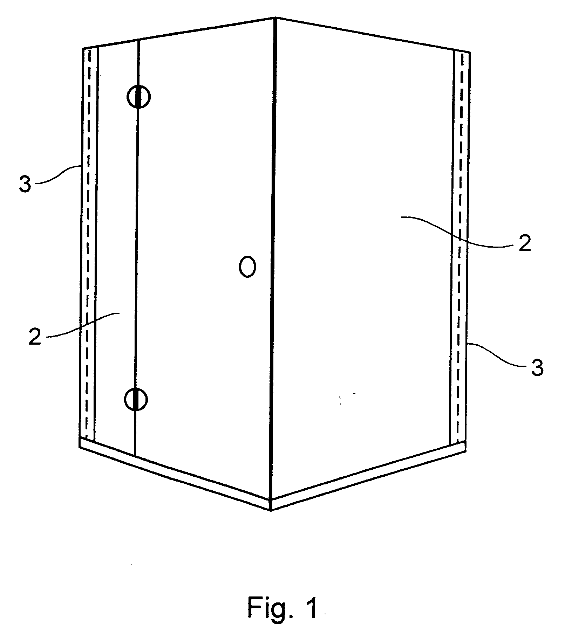

Die Figur 1 zeigt eine Duschabtrennung, welche auf der linken und rechten Seite jeweils ein feststehendes Seitenteil 2 aufweist, die durch entsprechende Wandanschlussprofile 3 gehalten werden.

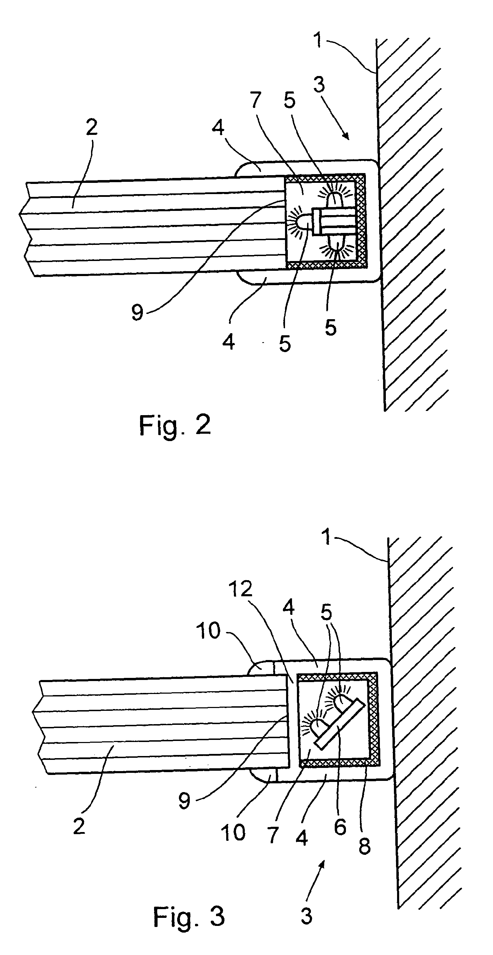

Bei dem Ausführungsbeispiel der Figur 2, wird in einer Schnittdarstellung durch das Wandanschlussprofil 3 und einer Glasscheibe 2 der Aufbau eines solchen Wandanschlussprofiles 3 mit entsprechender Beleuchtung sichtbar. Das Wandanschlussprofil 3 ist in diesem Beispiel kann aus jedem vorgenannten Material hergestellt werden, vorzugsweise aus einem transparenten Material. Innerhalb eines Hohlraumes 7, der in diesem Falle U-förmig dadurch ausgebildet wird, dass eine nicht näher bezeichnete Rückwand des Wandanschlussprofiles 3, an einer Wand 1 durch Kleben oder schrauben usw. befestigt wird, und gleichzeitig zwei seitlich in einem Winkel von etwa 90° von der Rückwand beabstandet abgehende Schenkel 4 aufweist. Zwischen den freien Enden der Schenkel 4 taucht die Glasscheibe 2 des Seitenteiles ein. Innerhalb des verbleibenden Hohlraumes 7 sind Leuchtmittel in Form von LED's 5 angeordnet, die auf einer Platine 6 elektrisch verschaltet und stabilisiert sind. Die gesamte Beleuchtungseinrichtung wird durch eine Isolierung 8 vor äußeren Feuchtigkeitseinflüssen geschützt.

Das Licht der LED's 5 kann somit über drei Bereiche aus dem Wandanschlussprofil 3 heraustreten. Dieses sind einmal die beiden Schenkel 4 und darüber hinaus über eine Stirnkante 9 der Glasscheibe 2. Dieses eintretende Licht wird innerhalb der Glasscheibe 2 über einen bestimmten Bereich weitergeleitet, bis die Intensität verbraucht ist.

Das Ausführungsbeispiel der Figur 3 ist ähnlich dem Ausführungsbeispiel der Figur 2, jedoch befindet sich vor der Stimkante 9 der Glasscheibe ein Steg 12, der kraft- und formschlüssig zwischen den beabstandeten Schenkeln 4 des Wandanschlussprofiles 3 vorhanden ist. In dem dahinter liegenden Hohlraum 7 ist - wie bereits beschrieben - die Beleuchtungseinrichtung angeordnet. In diesem Falle wird die Beleuchtungseinrichtung durch die LED's 5 mit der Platine 6 so ausgerichtet, dass das Licht z. B. nur durch einen Schenkel 4 des Wandanschlussprofiles 3 austreten und in die Glasscheibe 2 über die Stirnkante 9 und den Steg 12 eintreten kann. Zur besseren Abdichtung der Glasscheibe 2 gegenüber dem Wandanschlussprofil 3 sind an den freien Enden der Schenkel 4 elastische Lippen 10 angeformt.

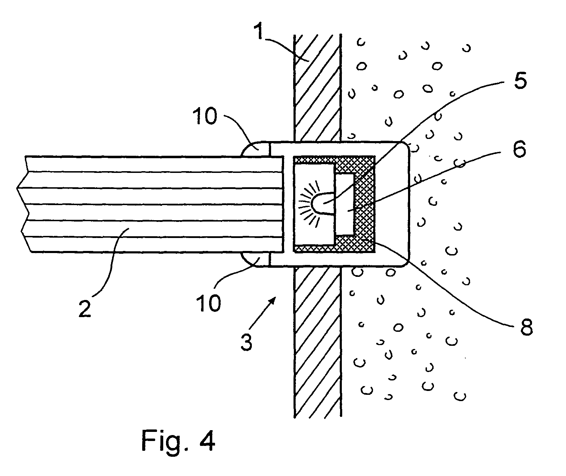

Bei einer weiteren Ausführungsform, die in der Figur 4 angegeben wird, ist ein Wandanschlussprofil 3 verwendet worden, das ebenfalls U-förmig ausgestaltet ist. Dieses Wandanschlussprofil besteht z. B. aus Leichtmetall, Messing oder Edelstahl und ist teilweise in die Wand 1 eingelassen. Auch hier taucht die Glasscheibe 2 zwischen die Schenkel 4 des Wandanschlussprofiles 3 ein und es bildet sich somit ein Hohlraum 7, der auch hier mit entsprechenden Beleuchtungseinrichtungen wie LED's 5 und Platine 6 ausgestattet ist. Dieses Ausführungsbeispiel eignet sich insbesondere dann, wenn die Kabelverlegung für die Betreibung der Beleuchtungseinrichtungen innerhalb der Gebäudewände 1 vorgenommen werden soll.

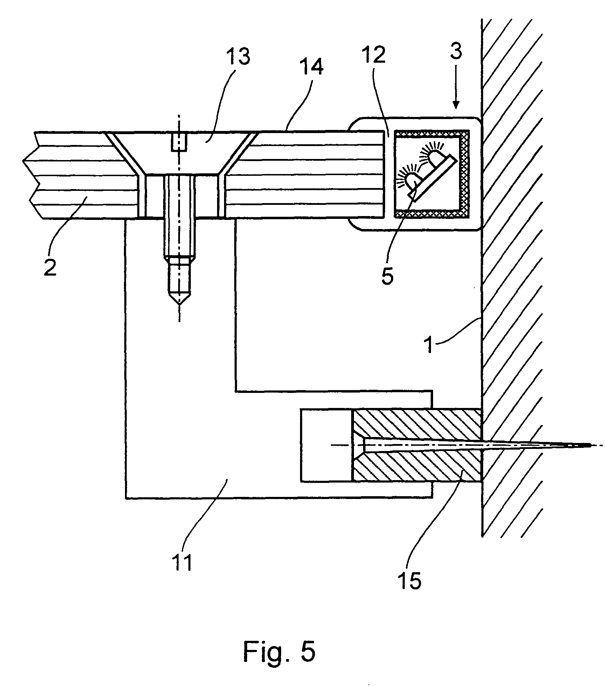

In einem weiteren Ausführungsbeispiel der Figur 5 wird eine Befestigung der Glasscheibe 2 über einen innerhalb der Glasscheibe 2 flächenbündig mit der Glasoberfläche 14 verschraubten Beschlag 13 vorgenommen. Die Verschraubung 13 greift in einen beispielsweise rechteckigen Wandhalter 11 ein, der anderends über eine Wandbefestigung 15 mit der Wand 1 verbunden wird. Die lichttechnische Ausführung ist wie bei den vorhergehenden Ausführungsbeispielen die gleiche.

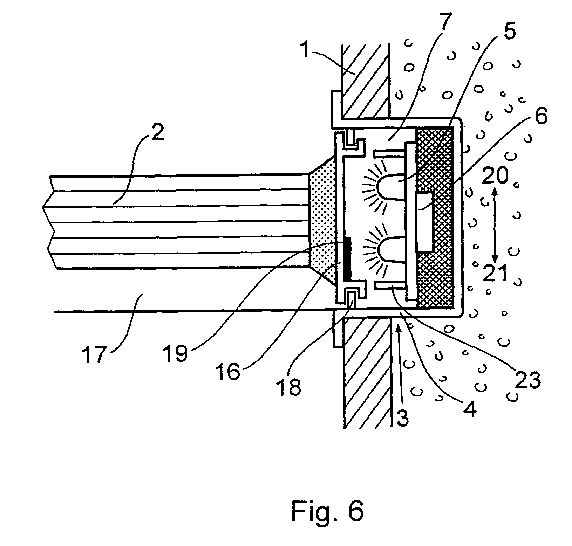

In einem weiteren Ausführungsbeispiel, das die Figur 6 wiedergibt, ist ein Wandanschlussprofil 3 verwendet worden, das innerhalb der Wand 1 eingelassen ist, das über eine größere Breite als die Dicke der Glasscheibe 2 verfügt. Bei einer solchen Ausführung kann bei der Montage der Glasscheibe 2 ein Toleranzausgleich vorgenommen werden. Ein Schenkel 4 des Wandanschlussprofiles 3 schließt z.B. mit einer Außenkante einer Duschtasse 2 ab, während der zweite Schenkel 4 zum Innenraum der Duschabtrennung weist. Zwischen den beiden freien Enden der Schenkel 4 befindet sich ein Abschlussprofil 16, das aus einem transparenten Material besteht. Befestigt wird das Abschlussprofil 16 z.B. an Vorsprüngen 18, die sich an den Schenkeln 4 befinden. Hinter dem Abschlussprofil 16 befindet sich der Hohlraum 7 mit der Beleuchtungseinrichtung. Diese besteht aus mindestens einer Reihe von LED's 5, die sich auf der Platine 6 befinden. Je nach Platzierung der Glasscheibe 2 vor dem Abschlussprofil 16 können unterschiedliche vertikale Reihen der LED's 5 elektrisch angesteuert und damit beleuchtet werden. Es ist jedoch auch denkbar, dass die gesamte Beleuchtungseinrichtung in die Verstellrichtungen 20,21 verschoben werden. Zur Bündelung des Lichtes der LED's 5 können neben den LED's 5 Vorsprünge 23 vorgesehen werden. Ferner kann der Bereich des Abschlussprofiles 16, aus dem kein Licht austreten soll durch eine Abdeckung 19 verschlossen werden. Den Anschluss der Glasscheibe 2 an das Abschlussprofil 16 kann eine transparente Dichtung 22 oder eine Versiegelungsmasse bilden.

Das gleiche breitere Wandanschlussprofil 3 welches in dem Ausführungsbeispiel 6 zur Anwendung gekommen ist kann auch in dem Ausführungsbeispiel 7 eingesetzt werden. Hier ist keine Abdeckung 19 vorhanden, so dass sowohl aus dem Wandanschlussprofil 3 das Licht austritt als das es auch in die Glasscheibe 2 eintritt. So wird neben einer beleuchteten Glasscheibe 2 auch ein beleuchteter Wandstreifen geschaffen.

Erfindungsgemäß ist es ebenfalls denkbar, dass die LED's 5 mit einer entsprechenden Schaltung versehen sind, die es ermöglicht, dass die LED's 5 in ihrer Anschaltdauer, Helligkeit usw. variiert werden können.

### Bezugszeichenliste

- 1: Wand
- 2: Seitenteil/Glasscheibe
- 3: Wandanschlussprofil
- 4: Schenkel
- 5: LED
- 6: Platine
- 7: Hohlraum
- 8: Isolierung
- 9: Stirnkante
- 10: elastische Lippen
- 11: Wandhalter
- 12: Steg
- 13: Verschraubung
- 14: Glasoberfläche
- 15: Wandbefestigung
- 16: Abschlussprofil
- 17: Duschtasse
- 18: Vorsprung
- 19: Abdeckung
- 20: Verstellrichtung
- 21: Verstellrichtung
- 22: Dichtung
- 23: Vorsprung

## Patentansprüche

1. Feststehendes Seitenteil für eine Duschabtrennung, das im Wesentlichen aus einer flächigen Glasscheibe (2) besteht, und durch ein mindestens zwei beabstandete Schenkel (4) aufweisendes Wandanschlussprofil (3) stationär an einer Wand (1) und/oder einem unteren und/oder oberen Querprofil befestigt ist, wobei das Wandanschlussprofil (3) und/oder mindestens eines der Querprofile zumindest einen Hohlraum (7) aufweist, in dem bereichsweise die Glasscheibe (2) eintaucht und befestigt wird, **gekennzeichnet dadurch, dass** der Hohlraum (7) mit mindestens einer Lichtquelle ausgestattet ist.

2. Feststehendes Seitenteil nach Anspruch 1, **dadurch gekennzeichnet, dass** das Wandanschlussprofil (3) und das Querprofil aus Leichtmetall, Messing, Edelstahl oder einem nicht transparenten Kunststoff besteht.

3. Feststehendes Seitenteil nach einem der vorhergehenden Ansprüche, **dadurch gekennzeichnet, dass** das Wandanschlussprofil (3) und das Querprofil zumindest teilweise aus einem transparenten Kunststoff besteht.

4. Feststehendes Seitenteil nach einem der vorhergehenden Ansprüche, **dadurch gekennzeichnet, dass** in dem Bereich, in dem die Glasscheibe (2) in das Wandanschlussprofil (3) eintaucht, elastische Lippen an den Schenkeln (4) und dem Querprofil angeformt sind.

5. Feststehendes Seitenteil nach einem der vorhergehenden Ansprüche, **dadurch gekennzeichnet, dass** der Hohlraum (7) zu einer Stirnkante (9) der Glasscheibe (2) durch einen transparenten Steg (12) abgeschlossen ist.

6. Feststehendes Seitenteil nach Anspruch 5, **dadurch gekennzeichnet, dass** der Steg (12) aus einem nicht transparenten Material besteht.

7. Feststehendes Seitenteil nach einem der vorhergehenden Ansprüche, **dadurch gekennzeichnet, dass** das Wandanschlussprofil (3) innerhalb der Wand (1) eingelassen ist, und die Glasscheibe (2) durch Dichtmittel (22) in dem Wandanschlussprofil (3) gehalten wird.

8. Feststehendes Seitenteil nach einem der vorhergehenden Ansprüche, **dadurch gekennzeichnet, dass** das Wandanschlussprofil (3) und die Glasscheibe (2) durch einen separaten Wandhalter (11) an der Wand (1) gehalten werden.

9. Feststehendes Seitenteil nach einem der vorhergehenden Ansprüche, **dadurch gekennzeichnet, dass** der Wandhalter (11) innerhalb der Glasscheibe (2) durch eine versenkte mit einer Glasoberfläche (14) bündig abschließende Verbindung befestigt wird.

10. Feststehendes Seitenteil nach einem der vorhergehenden Ansprüche, **dadurch gekennzeichnet, dass** der Hohlraum (7) zumindest bereichsweise mit einer reflektierenden Folie ausgekleidet ist.

11. Feststehendes Seitenteil nach einem der vorhergehenden Ansprüche, **dadurch gekennzeichnet, dass** das Licht der Lichtquelle über die Stirnkante (9) der Glasscheibe (2) in die Fläche der Glasscheibe (2) des Seitenteiles eintritt.

12. Feststehendes Seitenteil nach einem der vorhergehenden Ansprüche, **dadurch gekennzeichnet, dass** das Wandanschlussprofil (3) innerhalb der Wand (1) eingelassen ist und wesentlich breiter als die Glasscheibe (2) dick ist und an seinen freien Schenkeln (4) durch ein auswechselbares, transparentes Abschlussprofil (16) verschlossen wird.

13. Feststehendes Seitenteil nach einem der vorhergehenden Ansprüche, **dadurch gekennzeichnet, dass** das Licht der Lichtquelle durch mindestens einen der Schenkel (4) und/oder Steg (12) und/oder dem Abschlussprofil (16) des Wandanschlussprofiles (3) und/oder des Querprofiles austritt.

14. Feststehendes Seitenteil nach einem der vorhergehenden Ansprüche, **dadurch gekennzeichnet, dass** das Licht der Lichtquelle durch mindestens einen der Schenkel (4) und/oder den Steg (12) und/oder das Abschlussprofil (16) des Wandanschlussprofiles (3) und/oder des Querprofiles austritt und/oder über die Stirnkante (9) der Glasscheibe (2) in die Fläche der Glasscheibe (2) eintritt.

15. Feststehendes Seitenteil nach einem der vorhergehenden Ansprüche, **dadurch gekennzeichnet, dass** die Lichtquelle vorzugsweise als LED's (5) ausgebildetes Leuchtmittel verwendet wird.

16. Feststehendes Seitenteil nach einem der vorhergehenden Ansprüche, **dadurch gekennzeichnet, dass** mehrere Reihen LED's (5) nebeneinander angeordnet sind.

17. Feststehendes Seitenteil nach einem der vorhergehenden Ansprüche, **dadurch gekennzeichnet, dass** die Lichtquelle über die gesamte Länge des Wandanschlussprofiles (3) und/oder des Querprofiles oder zumindest über eine Teillänge sich erstreckt.

18. Feststehendes Seitenteil nach einem der vorhergehenden Ansprüche, **dadurch gekennzeichnet, dass** die Leuchtmittel auf einer Platine (6) befestigt sind.

19. Feststehendes Seitenteil nach einem der vorhergehenden Ansprüche, **dadurch gekennzeichnet, dass** die Leuchtmittel und die Platine (6) durch eine Isolierung (8) geschützt sind.

20. Feststehendes Seitenteil nach einem der vorhergehenden Ansprüche, **dadurch gekennzeichnet, dass** die Glasscheibe (2) aus Weißglas besteht.

21. Feststehendes Seitenteil nach einem der vorhergehenden Ansprüche, **dadurch gekennzeichnet, dass** die Glasscheibe (2) eine Struktur enthält.

22. Feststehendes Seitenteil nach einem der vorhergehenden Ansprüche, **dadurch gekennzeichnet, dass** die Glasscheibe (2) an der Oberfläche bedruckt oder angeätzt ist.

23. Feststehendes Seitenteil nach einem der vorhergehenden Ansprüche, **dadurch gekennzeichnet, dass** die Leuchtmittel justiert und verschoben werden können.

24. Feststehendes Seitenteil nach einem der vorhergehenden Ansprüche, **dadurch gekennzeichnet, dass** das Abschlussprofil (16) auswechselbar ist und zumindest bereichsweise mit einer Abdeckung (19) versehen werden kann.
